Europäisches Patentamt

**European Patent Office**

**Office européen des brevets**

(11) Numéro de publication:     **0 178 965**

**A1**

(12) # DEMANDE DE BREVET EUROPEEN

(21) Numéro de dépôt: **85401760.5**

(22) Date de dépôt: **10.09.85**

(51) Int. Cl.⁴: **G 06 K 19/06**
**C 14 B 5/00**

(30) Priorité: **18.09.84 FR 8414281**
**26.12.84 FR 8419824**

(43) Date de publication de la demande:
**23.04.86 Bulletin 86/17**

(84) Etats contractants désignés:
**AT BE CH DE FR GB IT LI LU NL SE**

(71) Demandeur: **S.A.R.L. MANUFACTURE FRANCAISE DES CHAUSSURES ERAM**

**F-49110 Saint Pierre Montlimart(FR)**

(71) Demandeur: **Loriot, Jean-Marc**
**15 rue Lakanal**
**F-75015 Paris(FR)**

(72) Inventeur: **Biotteau, Géard**
**Les Zinnias**
**F-49110 Saint Pierre Montlimart(FR)**

(72) Inventeur: **Loriot, Jean-Marc**
**15 Rue Lakanal**
**F-75015 Paris(FR)**

(74) Mandataire: **Lemonnier, André**
**4 Boulevard Saint-Denis**
**F-75010 Paris(FR)**

(54) **Perfectionnement aux codes à lecture optique et lecteur pour l'exploitation desdits codes.**

(57) La présente invention a pour objet un code à lecture optique. Ce code est matérialisé par des surfaces (8) présentant un coefficient de réflexion optique ou de luminosité différent de celui du fond (6).

L'invention est notamment applicable aux gabarits de découpe pour le placement sur une surface telle qu'une peau afin de mettre en mémoire un plan de découpe et elle a également pour objet un lecteur optique adapté plus spécialement à la lecture de tels codes.

Fig. 2

## Perfectionnement aux codes à lecture optique et lecteur pour l'exploitation desdits codes.

La présente invention concerne les codes à lecture optique. Les plus connus des codes à lecture optique sont les codes dits à barres qui comportent une série de barres imprimées en noir sur une surface blanche, la cellule de lecture émettant, pendant le déplacement du lecteur au-dessus de la surface du code, un signal modulé en fonction de l'écartement et de la largeur de ces bandes. L'inconvénient de ces codes à barres est qu'ils doivent obligatoirement être imprimés sur une réserve blanche ayant des dimensions importantes de sorte que le code occupe une partie importante des étiquettes informatives et constitue sur les emballages des produits marqués un élément qui nuit à l'esthétique.

Des codes à lecture optique analogues constitués éventuellement par des figures géométriques dont le nombre, la forme, la dimension et la disposition constituent le code, sont utilisés pour repérer l'identité et le positionnement des gabarits disposés sur les peaux, ou feuilles en matériaux divers ou tissus au stade préparatoire de la découpe automatique de ces matériaux au laser ou autre suivant un plan de découpe. Dans ce procédé l'identité et le positionnement des gabarits sont mis en mémoire et utilisés ultérieurement pour piloter le découpage.

La lecture des codes apposés sur les gabarits se heurte à la difficulté que la couleur des peaux, feuilles diverses et tissus étant variable, la tonalité de la surface de certains d'entre eux peut être confondue avec la tonalité des codes apposés sur les gabarits et il peut en résulter des défauts de fonctionnement graves. Pour y remédier il était nécessaire d'utiliser, en fonction de la couleur ou de la tonalité du matériau à découper, des gabarits dont les repères présentaient, avec la couleur du matériau, un contraste suffisant. Cette manière de faire augmentait le nombre de gabarits nécessaires pour une même forme et alourdissait le processus d'exploitation.

La présente invention a pour but de remédier à ces inconvénients et ce but est atteint par le fait que les codes à lecture optique sont matérialisés par des surfaces présentant un coefficient de réflexion optique ou de luminosité différent de celui du fond.

Les surfaces constituant le code peuvent présenter un coefficient de réflexion plus faible que la surface sur laquelle il est apposé. Ceci peut être le cas de codes imprimés sur des surfaces métalliques ou réfléchissantes telles que des surfaces de boîtes métalliques, des miroirs ou analogues, les surfaces constituant le code pouvant être imprimées en mat sur la surface de l'objet.

Selon le cas le plus général les surfaces du code présentent un coefficient de réflexion plus élevé que la surface sur laquelle le code est apposé. Ceci peut en pratique résulter du fait que le code est imprimé avec une encre présentant un coefficient de réflexion élevé, que le code est réalisé par des réserves d'une impression en mat sur un support réfléchissant tel qu'un clinquant métallique ou encore que le code est matérialisé par des découpes dans une surface mate apposée sur un support réfléchissant.

Enfin les surfaces constituant les codes peuvent présenter une luminosité plus élevée que le fond du fait qu'ils sont imprimés en une matière fluorescente ou phosphorescente.

Les gabarits de découpe pour le placement sur une surface telle qu'une peau afin de mettre en mémoire un plan de découpe comportent, conformément à l'invention, un code à lecture optique tel que ci-dessus.

Selon un mode de réalisation préférentiel des gabarits de découpe, les codes sont réalisés par des fenêtres dans des gabarits en un matériau sans pouvoir réfléchissant doublés sur leur face destinée à être apposée sur le matériau à découper et au moins au droit desdites fenêtres d'une feuille en un matériau à haut pouvoir réfléchissant ou enduite d'une couche à haut pouvoir réfléchissant. Ce type de codes dans lequel la surface lue se trouve en retrait par rapport à la surface d'ensemble présente l'avantage de permettre le masquage d'une partie du code, par exemple par une bande adhésive arrachable, et le démasquage ultérieur par retrait de ladite bande sans risque d'endommager le code. Ceci peut s'avérer très avantageux dans le cas d'un produit repéré au stade de la fabrication et de la commercialisation en gros par un code très complet dont une partie ne présente d'intérêt qu'au stade de la vente au détail.

Dans cette application et de manière préférentielle, au moins
une partie du gabarit est réalisée en un matériau ferromagnétique éventuellement magnétisé. C'est ainsi que la couche réfléchissante peut être réalisée par une tôle en acier inoxydable.
L'utilisation de tels gabarits avec une table de placement
magnétisée ou en un matériau ferromagnétique assure un maintien
positif en position du gabarit sur le matériau à découper
et évite les déplacements accidentels des gabarits.

La présente invention a également pour objet un lecteur spécial
pour l'exploitation desdits codes qui comporte en combinaison
une cellule photo-électrique de type connu associée à une
source lumineuse éclairant la surface située en face de l'ouverture de ladite cellule. Pour éviter l'éclairement parasite
de la cellule par des sources extérieures, la cellule et la
source lumineuse peuvent être enfermées dans un capotage
présentant une fenêtre d'exploration destinée à être appliquée
contre la surface sur laquelle est apposé le code.

Selon une autre caractéristique, le capotage est monté mobile
élastiquement par rapport au corps du lecteur et son enfoncement ferme un contact contrôlant l'alimentation de la source
lumineuse et/ou de la cellule et des circuits associés.

L'invention sera décrite plus en détail ci-après avec référence aux dessins ci-annexés dans lesquels:

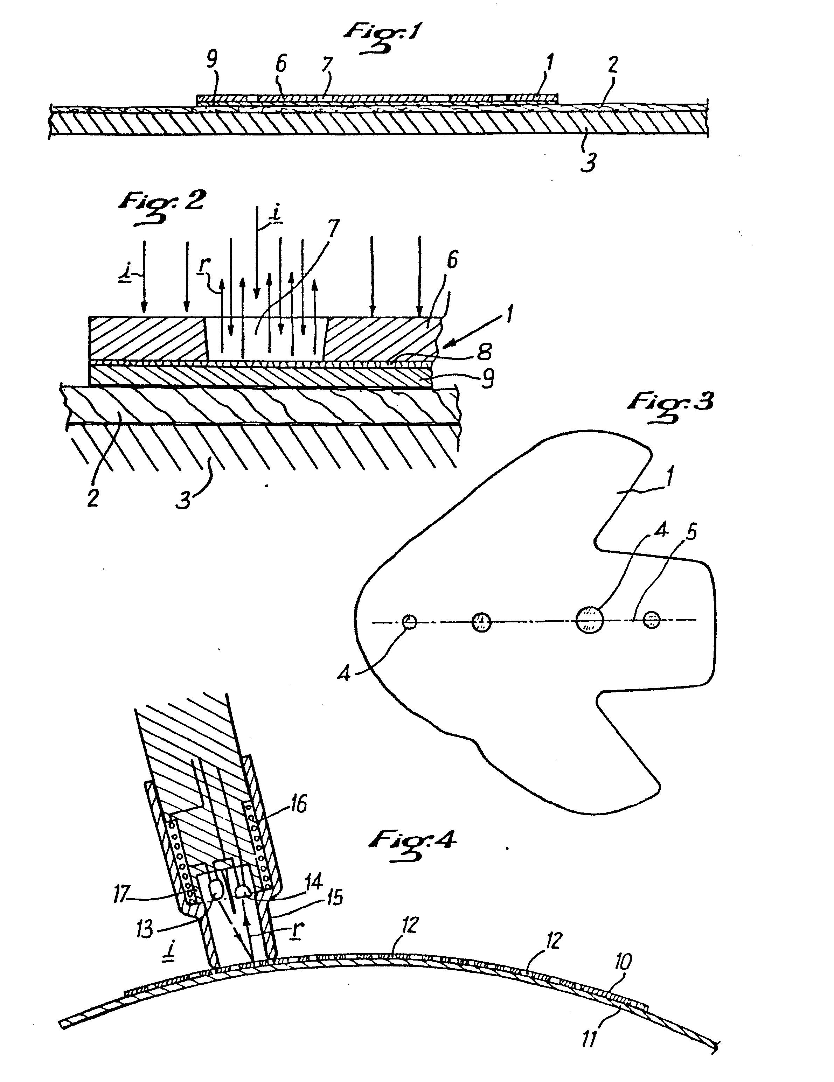

La figure 1 est une vue en coupe d'un gabarit
de découpe conforme à l'invention appliqué sur
une peau sur une table de placement; la figure
2 est une vue de détail de la figure 1; la figure
3 est une vue en plan du gabarit; la figure 4
est une vue schématique de détail en coupe d'un
code réalisé par découpe d'une étiquette apposée
sur une boîte métallique et de la pointe d'un
lecteur de code en cours de lecture de ce code.

Dans les figures 1 à 3 la référence 1 désigne d'une façon générale le gabarit, la référence 2 la peau sur laquelle sont disposés les divers gabarits de découpe et la référence 3 la table de positionnement.

Selon la technique connue les différents gabarits sont identifiés par une combinaison de repères de codage 4 détectables en nombre, forme et position par un lecteur optique, l'axe 5 selon lequel sont disposés ces repères de codage permettant la mise en mémoire de l'orientation du gabarit.

Comme exposé dans l'introduction et selon la technique connue la couleur des repères 4 est choisie pour trancher avec la couleur de la surface du gabarit afin de permettre une identification optique sûre au moyen d'une cellule photo-électrique. Toutefois lorsque la surface de la peau 2 a une tonalité contrastée avec celle du gabarit et se rapproche de la tonalité des repères 4, le lecteur optique peut confondre les deux surfaces, ce qui oblige à prévoir des dispositifs de discrimination complexes dans le circuit du lecteur ou à prévoir plusieurs jeux de gabarits présentant des repères de couleurs variées pour pouvoir choisir dans tous les cas un jeu de gabarits dont la couleur des repères tranche avec celle de la peau.

Conformément à l'invention et selon ce mode de réalisation les repères sont réalisés dans la couche supérieure 6 du gabarit sous forme de découpes 7 qui rendent apparente la couche réflectrice de surface 8 de la couche sous-jacente 9 du gabarit. De ce fait seuls les rayons lumineux incidents $i$ qui tombent sur la couche réflectrice 8 sont réfléchis en $r$.

La couche 9 peut être en un matériau ferromagnétique par exemple en tôle de fer mince et si la table 3 est magnétisée, le gabarit 1 sera maintenu en position pendant l'opération de positionnement sans risque de déplacement accidentel.

Dans le mode de réalisation de la figure 4, le code est réalisé sur une étiquette ou un habillage 10 appliqué sur une surface naturellement réfléchissante telle que le corps 11 d'une boîte en fer blanc. Dans ce cas le code, par exemple le code à barres, peut être constitué par une série de fentes 12 réalisées dans l'étiquette ou l'habillage. Pour la lecture d'un code conforme à l'invention, il est possible d'utiliser comme rayons incidents i les rayons lumineux de l'ambiance mais il y a alors possibilité de rayonnements parasites. Il est donc préférable, comme illustré dans la figure 4 et lorsque cela est possible, d'utiliser un lecteur optique comportant sa propre source de rayonnement 13 dont les rayons réfléchis par les surfaces des codes excitent une cellule 14. Il est alors préférable d'entourer la zone de lecture par un cache 15 qui, dans l'exemple représenté, est mobile télescopiquement sous l'action d'un ressort 16, un contact 17 d'alimentation de la lampe 13 étant fermé lorsque le cache 15 est en appui sur la surface 12.

REVENDICATIONS

1. Un code à lecture optique,
caractérisé en ce qu'il est matérialisé par des surfaces
(8) présentant un coefficient de réflexion optique ou de
luminosité différent de celui du fond (6).

2. Un code à lecture optique selon la revendication 1,
caractérisé en ce que les surfaces constituant le code présentent un coefficient de réflexion plus faible que la surface sur laquelle le code est apposé.

3. Un code à lecteur optique selon la revendication 1,
caractérisé en ce que les surfaces constituant le code présentent un coefficient de réflexion plus élevé que la surface sur laquelle le code est apposé.

4. Un code à lecture optique selon la revendication 3,
caractérisé en ce que le code est matérialisé par des découpes (7) dans une surface mate (6) apposée sur un support réfléchissant (8).

5. Un code à lecture optique selon la revendication 1,
caractérisé en ce que les surfaces constituant les codes
présentent une luminosité plus élevée que le fond du fait
que les codes sont imprimés en une matière fluorescente ou
phosphorescente.

6. Un gabarit de découpe pour le placement sur une surface
telle qu'une peau afin de mettre en mémoire un plan de découpe,
caractérisé en ce que le gabarit comporte un code à lecture
optique selon l'une quelconque des revendications 1 à 5.

7. Un gabarit de découpe selon la revendication 6,
caractérisé en ce que le code est réalisé par des fenêtres
(7) dans le gabarit réalisé en un matériau (6) sans pouvoir réfléchissant doublé sur sa face destinée à être apposée sur le matériau (2) à découper et au moins au droit desdites fenêtres (7) d'une feuille (9) en un matériau à haut pouvoir réfléchissant ou enduite d'une couche (8) à haut pouvoir réfléchissant.

8. Un gabarit selon la revendication 6, caractérisé en ce qu'au moins une partie du gabarit (1) est réalisé en un matériau ferromagnétique éventuellement magnétisé.

9. Un lecteur optique pour la lecture des codes selon l'une quelconque des revendications 1 à 5, caractérisé en ce qu'il comporte en combinaison une cellule photo-électrique (14) de type connu associée à une source lumineuse (13) éclairant la surface située en face de l'ouverture de ladite cellule.

10. Un lecteur optique selon la revendication 9, caractérisé en ce que la cellule (14) et la source lumineuse (13) sont enfermées dans un capotage (15) présentant une fenêtre d'exploration destinée à être appliquée contre la surface sur laquelle est apposé le code.

11. Un lecteur optique selon la revendication 10, caractérisé en ce que le capotage (15) est monté mobile élastiquement (16) par rapport au corps du lecteur et son enfoncement ferme un contact (17) contrôlant l'alimentation de la source lumineuse (13) et/ou de la cellule (14) et des circuits associés.

*Fig.1*

*Fig.2*

*Fig.3*

*Fig.4*

Office européen
des brevets

**RAPPORT DE RECHERCHE EUROPEENNE**

0178965
Numéro de la demande

EP 85 40 1760

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| X | FR-A-2 031 646 (J. GOUYOU-BEAUCHAMPS) * Figures 1-3; page 3, ligne 15 - page 5, ligne 11 * | 1,3,4 | G 06 K 19/06 C 14 B 5/00 |
| Y | | 5-7,9 11 | |
| X | FR-A-2 302 562 (STAES) * En entier * | 1,2 | |
| X | US-A-4 317 030 (BEGHELL) | 1,2 | |
| Y | US-A-4 249 072 (BUROS) * Figure 1; colonne 3, lignes 24-36 * | 5 | DOMAINES TECHNIQUES RECHERCHES (Int. Cl.4) |
| Y | FR-A-2 506 782 (BENEDITE) * En entier * | 6,7 | G 06 K B 07 C C 14 B |
| Y | FR-A-2 087 845 (ROWLAND) * Figure 2; page 6, ligne 18 - page 7, ligne 16 * | 9-11 | |

Le présent rapport de recherche a été établi pour toutes les revendications

| Lieu de la recherche LA HAYE | Date d'achèvement de la recherche 13-12-1985 | Examinateur FORLEN G.A. |
|---|---|---|